# EUROPEAN PATENT SPECIFICATION

(11) **EP 4 484 233 B1**
(45) Date of publication and mention of the grant of the patent: **11.11.2026**
(21) Application number: 24155797.4
(22) Date of filing: 05.02.2024
(51) Int. Cl.: B60W 10/04, B60W 30/18

(54) **METHOD, VEHICLE AND STORAGE MEDIUM FOR VEHICLE ACCELERATION SLIP REGULATING**
VERFAHREN, FAHRZEUG UND SPEICHERMEDIUM ZUR REGELUNG DES BESCHLEUNIGUNGSSCHLUPFES EINES FAHRZEUGS
PROCÉDÉ, VÉHICULE ET SUPPORT DE STOCKAGE POUR RÉGULATION D'ACCÉLÉRATION DE GLISSEMENT DE VÉHICULE

(30) Priority: 28.06.2023 CN 202310782841
(43) Date of publication of application: 01.01.2025
(73) Proprietor: Xiaomi EV Technology Co., Ltd., Beijing 100176 (CN)
(72) Inventor: FENG, Maolin, Beijing, 100176 (CN)
(74) Representative: dompatent

(56) References cited:
- CN-A- 114 750 762
- US-A- 6 154 702
- US-A1- 2015 274 159

## Description

### TECHNICAL FIELD OF THE INVENTION

The invention relates to the technical field of vehicle control, in particular to method, apparatus, vehicle and storage medium for vehicle acceleration slip regulating.

### BACKGROUND OF THE INVENTION

Traction control system (TCS) is a system for suppressing skid of driving wheels of a vehicle, typically, the TCS determines a reference vehicle speed according to the obtained driving wheel speed and an acceleration in an inertial sensor signal, and determines a target slip ratio according to the estimated road adhesion coefficient and a vehicle speed, thus taking the sum of the target slip ratio and the reference vehicle speed as a target drive shaft speed, and if an actual drive shaft speed is greater than the target drive shaft speed, the TCS is activated to reduce the actual drive shaft speed by reducing a driving torque, thus achieving vehicle anti slip driving.

In order to ensure the robustness of the TCS and prevent false triggering of the TCS, when the vehicle is stationary, i.e., when the vehicle speed is 0 m/s, the target drive shaft speed is not the same as the reference vehicle speed, but slightly greater than the reference vehicle speed. Thus, the problem is caused that when driving wheels skid at the start of the vehicle, the TCS does not activate torque reduction immediately, and activates the torque reduction only when the skid amount exceeds a certain threshold, but in this case, the driving wheel speed is already high, and thus, vehicle anti slip driving cannot be achieved accurately and quickly.

US6154702A1 discloses a traction control system for a vehicle comprising an internal combustion engine connected to transmission, the engine equipped with a fuel rate controller responsive to a first control signal for applying a variable amount of drive torque to at least one driven wheel through a drive train,a brake system for applying braking torques to said drive wheels in response to a second control signal,an anti-skid control module connected to supply said first signal to said fuel rate controller and further connected to supply said second control signal to said brake system, said antiskid control module being responsive to a third control signal having a value indicating the estimated magnitude of said drive torque, means coupled to said fuel rate controller for generating a first value indicative of the amount of wheel torque generated by said internal combustion engine, means coupled to said engine for generating a second value proportional to the rate of change of the operating speed of said engine and indicative of the amount of wheel torque produced by the inertial movement of said engine; means coupled to said transmission for generating a third value indicating a torque ratio as a function of the speed ratio of the transmission indicative of the amount of wheel torque produced by said transmission; and means for combining the first, second, and third values to form said third control signal.

### SUMMARY OF THE INVENTION

In order to solve the problems existing in the related art, the invention provides a method, vehicle and storage medium for vehicle acceleration slip regulating.

According to a first aspect of the examples of the invention, provides a method for vehicle acceleration slip regulating, including:
obtaining a vehicle speed, state information of a driving motor, and an accelerator pedal opening degree of the vehicle at a current moment;
predicting a target wheel torque of the vehicle according to the state information of the driving motor at the current moment and state information of the driving motor at a last moment, the last moment is a previous moment of the current moment; and
performing acceleration slip regulation on the vehicle according to a driving mode, the vehicle speed, the accelerator pedal opening degree, a motor output torque in the state information of the driving motor and the target wheel torque at the current moment.

According to the first aspect, the step of performing acceleration slip regulation on the vehicle according to a driving mode, the vehicle speed, the accelerator pedal opening degree, a motor output torque in the state information of the driving motor, and the target wheel torque at the current moment comprises: performing acceleration slip regulation on the vehicle according to the motor output torque in the state information of the driving motor, a requested motor torque of the vehicle at the current moment, the target wheel torque, and a torque threshold of the vehicle at the current moment.

Optionally, the requested motor torque is determined according to the vehicle speed of the vehicle and the accelerator pedal opening degree at the current moment;
and the torque threshold is determined according to the vehicle speed and the driving mode of the vehicle at the current moment.

Optionally, the step of performing acceleration slip regulation on the vehicle according to the motor output torque in the state information of the driving motor, the requested motor torque of the vehicle at the current moment, the target wheel torque, and the torque threshold of the vehicle at the current moment includes:
determining a torque control value according to the motor output torque in the state information of the driving motor and the target wheel torque at the current moment; and
performing acceleration slip regulation for reducing the requested motor torque with the target wheel torque as a target in a case where the torque control value is greater than the torque threshold on the vehicle.

Optionally, the step of performing acceleration slip regulation for reducing the requested motor torque with the target wheel torque as a target in a case where the torque control value is greater than the torque threshold on the vehicle includes:
determining a magnitude relationship between a difference between the torque control value and the torque threshold and a preset difference threshold in the case where the torque control value is greater than the torque threshold;
performing acceleration slip regulation on the vehicle by reducing the requested motor torque to the target wheel torque within a preset period of time in a case where the difference between the torque control value and the torque threshold is greater than or equal to the preset difference threshold; or
performing acceleration slip regulation on the vehicle by reducing the requested motor torque to the target wheel torque according to a preset gradient in a case where the difference between the torque control value and the torque threshold is less than the preset difference threshold.

Optionally, the step of determining the torque control value according to the motor output torque in the state information of the driving motor and the target wheel torque at the current moment includes:
calculating a torque difference value between the motor output torque in the state information of the driving motor and the target wheel torque at the current moment, and determining the torque difference value as the torque control value at the current moment; or
calculating a torque quotient of the motor output torque in the state information of the driving motor and the target wheel torque at the current moment, and determining the torque quotient as the torque control value at the current moment.

Optionally, the state information of the driving motor includes a rotational speed of the driving motor; and
the step of predicting the target wheel torque of the vehicle according to the state information of the driving motor at the current moment and the state information of the driving motor at the last moment includes:
determining an angular acceleration of the driving motor according to the rotational speed of the driving motor of the vehicle at the current moment and a rotational speed of the driving motor at a last moment, the last moment is a previous moment of the current moment;
predicting a predicted wheel torque of the vehicle according to the angular acceleration, a rotational inertia of the vehicle, a damping coefficient of the driving motor, the rotational speed of the driving motor at the current moment, and the motor output torque at the current moment; and
determining the target wheel torque according to the rotational speed of the driving motor and the predicted wheel torque at the current moment.

Optionally, the step of determining the target wheel torque according to the rotational speed of the driving motor and the predicted wheel torque at the current moment includes:
repeating the following steps:
determining a predicted motor rotational speed corresponding to the predicted wheel torque provided by the driving motor;
determining a torque compensation amount according to the predicted motor rotational speed and the rotational speed of the driving motor at the current moment;
obtaining a deviation rectification wheel torque for compensating the predicted wheel torque according to the torque compensation amount in a case where the torque compensation amount satisfies a torque compensation condition;
taking the deviation rectification wheel torque as the motor output torque of the driving motor at the current moment, and predicting again a predicted wheel torque of the vehicle according to the angular acceleration, the rotational inertia of the vehicle, the damping coefficient of the driving motor, the rotational speed of the driving motor and the deviation rectification wheel torque at the current moment; and
taking the predicted wheel torque as the target wheel torque until the torque compensation amount does not satisfy the torque compensation condition.

Optionally, the predicted wheel torque Tload of the vehicle is predicted by the following calculation formula:${w}_{a} = \left({T}_{M}-k\times {w}_{v}-{T}_{load}\right) / J$ where wₐ is the angular acceleration, J is the rotational inertia of the vehicle, k is the damping coefficient of the driving motor, wᵥ is the rotational speed of the driving motor at the current moment, and T_{M} is the motor output torque of the driving motor at the current moment.

According to a second aspect of the examples of the invention, provides a vehicle, including:
a driving motor; a first processor; and
a first memory configured to store instructions which can be executed by the first processor;
where the first processor is configured to:
   obtain a vehicle speed, state information of the driving motor, and an accelerator pedal opening degree of the vehicle at a current moment;
   predict a target wheel torque of the vehicle according to the state information of the driving motor at the current moment and state information of the driving motor at a last moment, the last moment is a previous moment of the current moment; and
   perform acceleration slip regulation on the vehicle according to a driving mode, the vehicle speed, the accelerator pedal opening degree, a motor output torque in the state information of the driving motor and the target wheel torque at the current moment; wherein the first processor is configured to execute the instructions stored in the first memory to implement: performing acceleration slip regulation on the vehicle according to the motor output torque in the state information of the driving motor, a requested motor torque of the vehicle at the current moment, the target wheel torque, and a torque threshold of the vehicle at the current moment.

According to a third aspect of the examples of the invention, provides a computer-readable storage medium, having computer program instructions stored, where when the program instructions are executed by a second processor, the steps of the method for vehicle acceleration slip regulating provided in the first aspect of the invention are implemented.

The technical solutions provided by the examples of the invention may include the following beneficial effects:
by obtaining a vehicle speed, state information of a driving motor, and an accelerator pedal opening degree of the vehicle at a current moment; and predicting a target wheel torque of the vehicle according to the state information of the driving motor at the current moment and state information of the driving motor at a last moment, the last moment is a previous moment of the current moment, a wheel torque can be predicted which formed by a frictional resistance on the ground, thus improving the accuracy of subsequent control; and then acceleration slip regulation is performed on the vehicle according to a driving mode, the vehicle speed, the accelerator pedal opening degree, a motor output torque in the state information of the driving motor, and the target wheel torque at the current moment. Considering motor output torques under different driving modes, vehicle speeds and accelerator pedal opening degrees, the current driving state can be better matched, then sufficient adhesion can be provided for wheels of a vehicle, the probability of wheel slip can be reduced, and the vehicle driving capability can be enhanced.

It should be understood that the above general description and the following detailed description are only explanatory and illustrative, and cannot limit the invention.

### BRIEF DESCRIPTION OF DRAWINGS

The drawings here are incorporated into and constitute part of the description, illustrating the examples conforming to the invention, and are used together with the description to interpret the principles of the invention.
FIG. 1 is a flow chart of a method for vehicle acceleration slip regulating shown according to an example.
FIG. 2 is a block diagram of one implementation of Step S12 in FIG. 1 shown according to an example.
FIG. 3 is a flow chart of predicting a target wheel torque of a vehicle shown according to an example.
FIG. 4 is a flow chart of another method for vehicle acceleration slip regulating shown according to an example.
FIG. 5 is a block diagram of an apparatus for vehicle acceleration slip regulating shown according to an example.
FIG. 6 is a functional block diagram of a vehicle shown according to an example.

### DETAILED DESCRIPTION OF THE INVENTION

Examples will be described in detail here, instances of which are shown in accompanying drawings. When the following description relates to the accompanying drawings, unless otherwise indicated, the same numbers in the different accompanying drawings represent the same or similar elements. The embodiments described in the following examples do not represent all embodiments consistent with the invention. On the contrary, they are merely examples of devices and methods consistent with some aspects of the invention as detailed in the appended claims.

It should be noted that all actions of obtaining signals, information or data in this application are carried out under the premise of complying with the corresponding data protection regulations and policies of the country of the locality and with the authorization given by an owner of the corresponding device.

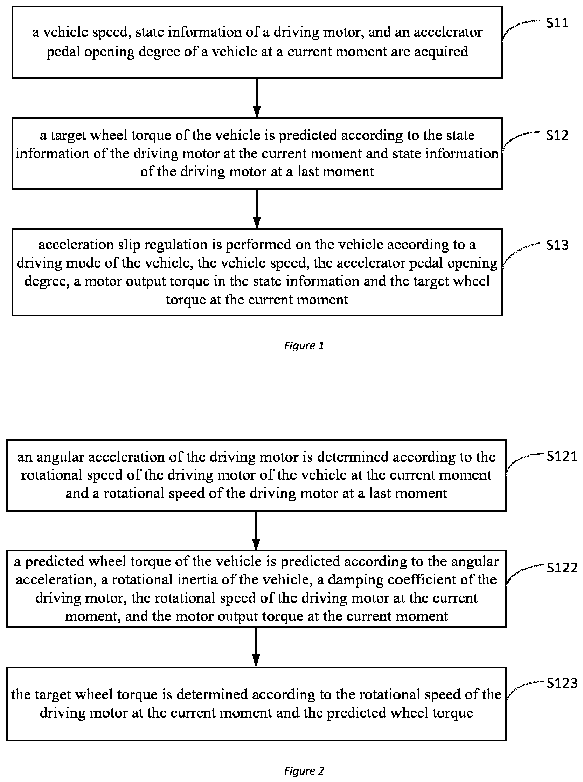

FIG. 1 is a flow chart of a method for vehicle acceleration slip regulating shown according to an example, and the method for vehicle acceleration slip regulating can be performed by a vehicle control unit, a chassis domain controller, an electronic stability program, and as shown in FIG. 1, includes the following steps.

In Step S11, a vehicle speed, state information of a driving motor, and an accelerator pedal opening degree of a vehicle at a current moment are obtained.

In the examples of the invention, the vehicle speed, the state information of the driving motor, and the accelerator pedal opening degree are obtained at each time.

In the examples of the invention, the vehicle speed of the vehicle at the current moment may be obtained by a vehicle speed sensor configured on a transmission of the vehicle, and a wheel speed of the vehicle may be obtained by a wheel speed sensor configured on the vehicle, and converted into the vehicle speed of the vehicle at the current moment. The state information of the driving motor at the current moment may be obtained by a sensor configured on the driving motor, and the accelerator pedal opening degree at the current moment may be directly obtained from the vehicle control unit or may be directly obtained from a stroke switch of an accelerator pedal.

In Step S12, a target wheel torque of the vehicle is predicted according to the state information of the driving motor at the current moment and state information of the driving motor at a last moment, the last moment is a previous moment of the current moment.

Where the state information of the driving motor at the current moment and the state information of the driving motor at the last moment can be inputted into a Luenberger observer to predict the target wheel torque of the vehicle, and the Luenberger observer can be constructed according to a rotational inertia of the vehicle and a damping coefficient of the driving motor.

It may be explained that the rotational inertia of the vehicle is determined by transmission components of the vehicle, that is, different vehicles may have different rotational inertia or vehicles of the same vehicle model have the same rotational inertia, and the rotational inertia may be stored on the vehicle by pre-calibration.

The damping coefficient of the driving motor is generally determined by the characteristics of the driving motor.

The wheel torque involved in the invention is generally determined by a product of a motor output torque and a speed ratio of a speed reducer, while a frictional force on the ground to wheels will affect the output of the wheel torque.

Optionally, the state information of the driving motor includes a rotational speed of the driving motor. Referring to FIG. 2, in Step S12, the step of a target wheel torque of the vehicle is predicted according to the state information of the driving motor at the current moment and state information of the driving motor at a last moment, the last moment is a previous moment of the current moment includes the following steps.

In Step S121, an angular acceleration of the driving motor is determined according to the rotational speed of the driving motor of the vehicle at the current moment and a rotational speed of the driving motor at a last moment, the last moment is a previous moment of the current moment.

Where the angular acceleration of the driving motor is determined based on a Luenberger observer, and the Luenberger observer first needs to be initialized by the rotational speed of the driving motor at the current moment, and then the subsequent steps are performed.

It can be understood that the rotational speed of the driving motor of the vehicle at the current moment is the sum of the rotational speed of the driving motor at the last moment and an integral of the angular acceleration of the driving motor over time, i.e., $w = {w}_{0} + {w}_{a} \times dt$ (1)
where w is the rotational speed of the driving motor of the vehicle at the current moment, w₀ is the rotational speed of the driving motor at the last moment, wₐ is the angular acceleration of the driving motor, and dt represents integrating over time.

In Step S122, a predicted wheel torque of the vehicle is predicted according to the angular acceleration, a rotational inertia of the vehicle, a damping coefficient of the driving motor, the rotational speed of the driving motor at the current moment, and the motor output torque at the current moment.

Optionally, the predicted wheel torque Tload of the vehicle is predicted by the following calculation formula: ${w}_{a} = \left({T}_{M}-k\times {w}_{v}-{T}_{load}\right) / J$ (2)
where wₐ is the angular acceleration, J is the rotational inertia of the vehicle, k is the damping coefficient of the driving motor, wᵥ is the rotational speed of the driving motor at the current moment, and T_{M} is the motor output torque at the current moment

In Step S123, the target wheel torque is determined according to the rotational speed of the driving motor at the current moment and the predicted wheel torque.

In the examples of the invention, it is determined whether deviation rectification needs to be performed on the predicted wheel torque according to a difference between the rotational speed of the driving motor at the current moment and a predicted motor rotational speed corresponding to the predicted wheel torque, then in a case where deviation rectification needs to be performed on the predicted wheel torque, deviation rectification is performed on the predicted wheel torque to obtain a deviation rectification wheel torque, a predicted wheel torque of the vehicle is predicted again by taking the deviation rectification wheel torque as the motor output torque at the current moment until there is no need to perform deviation rectification on the predicted wheel torque, and further, in a case where there is no need to perform deviation rectification on the predicted wheel torque, the predicted wheel torque is determined as the target wheel torque.

In this step S123, the step of determining the target wheel torque according to the rotational speed of the driving motor and the predicted wheel torque at the current moment includes:
repeating the following steps:
a predicted motor rotational speed corresponding to the predicted wheel torque provided by the driving motor is determined.

During specific implementation of the invention, the wheel torque can be determined according to a product of the motor output torque and a speed ratio of a Reducer, thus reversing the motor output torque based on a fixed speed ratio of the Reducer and the known wheel torque, thus determining the predicted motor rotational speed corresponding to the motor output torque according to the characteristics of the driving motor.

A torque compensation amount is determined according to the predicted motor rotational speed and the rotational speed of the driving motor at the current moment.

In the examples of the invention, the torque compensation amount is determined according to a rotational speed difference between the predicted motor rotational speed and the rotational speed of the driving motor at the current moment. For example, a magnitude of this rotational speed difference is taken as a magnitude of the torque compensation amount.

In a case where the torque compensation amount satisfies a torque compensation condition, the predicted wheel torque is compensated according to the torque compensation amount to obtain a deviation rectification wheel torque.

The torque compensation condition may be whether the torque compensation amount is within a torque compensation range, for example, whether the torque compensation amount is greater than 0, and at this time, the torque compensation range is 0 to infinity, or whether the torque compensation amount is greater than a preset compensation threshold, and at this time, the torque compensation range is the preset compensation threshold to infinity.

In the case where the torque compensation amount satisfies the torque compensation condition, the sum of the torque compensation amount and the predicted wheel torque is calculated to obtain the deviation rectification wheel torque.

The deviation rectification wheel torque is taken as the motor output torque at the current moment, and a predicted wheel torque of the vehicle is predicted again according to the angular acceleration, the rotational inertia of the vehicle, the damping coefficient of the driving motor, the rotational speed of the driving motor at the current moment, and the deviation rectification wheel torque.

In this step, the deviation rectification wheel torque is fed back into a Luenberger observer as the motor output torque at the current moment, that is, as a front feedback, then the predicted wheel torque of the vehicle is predicted again according to the foregoing formula (2), and the prediction and the front feedback are constantly performed until the torque compensation amount does not satisfy the torque compensation condition.

The predicted wheel torque is taken as the target wheel torque until the torque compensation amount does not satisfy the torque compensation condition.

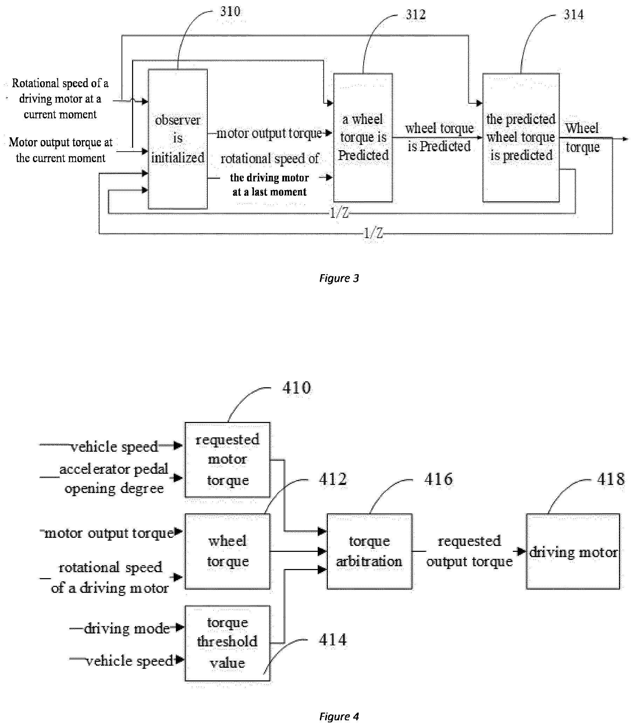

Referring to FIG. 3, the Luenberger observer is initialized at 310 based on the rotational speed of the driving motor at the current moment and the motor output torque to avoid the influence of the state information at the last time. Then the method in the previous example is executed at 312 to predict the wheel torque according to the motor output torque at the current moment and the state information of the driving motor at the last moment, the state information of the driving motor at the last moment such as the rotational speed of the driving motor at the last moment. Then the predicted wheel torque is subjected to deviation rectification according to the rotational speed of the driving motor at the current moment, and the wheel torque is predicted again at 314 according to the deviation rectification wheel torque obtained after deviation rectification, where Z shown in FIG. 3 is a state transfer parameter. Finally, in a case where the torque compensation amount does not satisfy the torque compensation condition, the predicted wheel torque is taken as the target wheel torque.

In Step S13, acceleration slip regulation is performed on the vehicle according to a driving mode of the vehicle, the vehicle speed, the accelerator pedal opening degree, a motor output torque in the state information and the target wheel torque at the current moment.

In a specific implementation, in the step S13, the step of acceleration slip regulation is performed on the vehicle according to a driving mode of the vehicle, the vehicle speed, the accelerator pedal opening degree, a motor output torque in the state information and the target wheel torque at the current moment includes:
a requested motor torque of the vehicle at the current moment is determined according to the vehicle speed of the vehicle and the accelerator pedal opening degree at the current moment.

In the examples of the invention, a table of the vehicle speed, the accelerator pedal opening degree and the requested motor torque is established in advance, and the requested motor torque of the vehicle at the current moment is determined by looking up the table through the vehicle speed and the accelerator pedal opening degree at the current moment.

A torque threshold of the vehicle at the current moment is determined according to the vehicle speed and the driving mode of the vehicle at the current moment.

Similarly, a table of the vehicle speed, the driving mode and the torque threshold is established in advance. For example, a torque threshold corresponding to a sports mode is larger while a torque threshold corresponding to a comfort mode is smaller. The torque threshold of the vehicle at the current moment is determined by looking up the table through the vehicle speed and the driving mode at the current moment.

Acceleration slip regulation is performed on the vehicle according to the motor output torque in the state information of the driving motor, the requested motor torque, the target wheel torque, and the torque threshold at the current moment.

In the examples of the invention, the step of acceleration slip regulation is performed on the vehicle according to the motor output torque in the state information of the driving motor, the requested motor torque, the target wheel torque, and the torque threshold at the current moment includes:
a torque control value is determined according to the motor output torque in the state information of the driving motor at the current moment and the target wheel torque.

In one embodiment, a torque difference value between the motor output torque in the state information of the driving motor and the target wheel torque may be calculated at the current moment, and the torque difference value may be taken as the torque control value.

In another embodiment, a torque ratio of the motor output torque in the state information of the driving motor to the target wheel torque may be calculated at the current moment, and the torque ratio may be used as the torque control value.

In a case where the torque control value is greater than the torque threshold, acceleration slip regulation is performed on the vehicle by reducing the requested motor torque with the target wheel torque as a target.

In the examples of the invention, reducing the requested motor torque with the target wheel torque as the target can be understood as reducing the requested motor torque until the requested motor torque is equal to the target wheel torque.

It can be understood that in a case where the torque control value is less than or equal to the torque threshold, the requested motor torque is equal to a demanded motor torque, so the driving motor may directly provide a torque to wheels according to the requested motor torque.

Optionally, the step of performing acceleration slip regulation on the vehicle by reducing the requested motor torque with the target wheel torque as a target in the case where the torque control value is greater than the torque threshold:
in the case where the torque control value is greater than the torque threshold, a magnitude relationship between a difference between the torque control value and the torque threshold and a preset difference threshold is determined.

In a case where the difference between the torque control value and the torque threshold is greater than or equal to the preset difference threshold, the requested motor torque is reduced to the target wheel torque within a preset period of time, and acceleration slip regulation is performed on the vehicle.

In a case where the difference between the torque control value and the torque threshold is less than the preset difference threshold, the requested motor torque is reduced to the target wheel torque according to a preset gradient, and acceleration slip regulation is performed on the vehicle.

In the examples of the invention, the preset gradient is a fixed value calibrated in advance so that the same torque is reduced every time. Reducing the requested motor torque to the target wheel torque within a preset period of time does not specify a reduction gradient, which may be performed by first reducing the torque with a greater gradient and then reducing the torque with a smaller gradient, the reduction gradient being related to the magnitude of the difference between the torque control value and the torque threshold relative to the preset difference threshold.

In the above technical solution, in the case where the difference between the torque control value and the torque threshold is greater than or equal to the preset difference threshold, the requested motor torque can be rapidly reduced to the target wheel torque, thus performing acceleration slip regulation on the vehicle in time. In the case where the difference between the torque control value and the torque threshold is less than the preset difference threshold, the requested motor torque may be smoothly reduced to the target wheel torque according to the preset gradient.

In the above technical solution, the vehicle speed of the vehicle, the state information of the driving motor, and the accelerator pedal opening degree at the current moment are obtaind. The target wheel torque of the vehicle is predicted according to the state information of the driving motor at the current moment and the state information of the driving motor at the last time to the current moment, so that the wheel torque that can be formed by a frictional resistance of a current ground can be predicted, thus improving the accuracy of subsequent control. Then acceleration slip regulation is performed on the vehicle according to the driving mode of the vehicle at the current moment, the vehicle speed, the accelerator pedal opening degree, the motor output torque in the state information at the current moment, and the target wheel torque. Considering motor output torques under different driving modes, vehicle speeds and accelerator pedal opening degrees, the current driving state can be better matched, then sufficient adhesion can be provided for wheels of a vehicle, the probability of wheel slip can be reduced, and the vehicle driving capability can be enhanced.

For example, the method for vehicle acceleration slip regulating provided by the invention is illustrated below by one example, referring to FIG. 4, first, the requested motor torque 410 is determined by looking up the table according to the vehicle speed and the accelerator pedal opening degree at the current moment, and the wheel torque 412 is predicted according to the motor output torque and the rotational speed of the driving motor at the current moment, and the method in the previous example is performed, the target wheel torque is determined, and the torque threshold 414 is determined by looking up the table according to the driving mode and the vehicle speed at the current moment. Further, a requested output torque is arbitrated 416 according to the requested motor torque, the target wheel torque and the torque threshold to obtain the requested output torque, and executed by the driving motor 418.

The determination of the requested motor torque, the prediction of the wheel torque, and the determination of the torque threshold have no sequential relationship, the above example is only one embodiment, and the determination of the requested motor torque, the prediction of the wheel torque, and the determination of the torque threshold may be performed simultaneously or in a certain sequence, which is not limited in the invention.

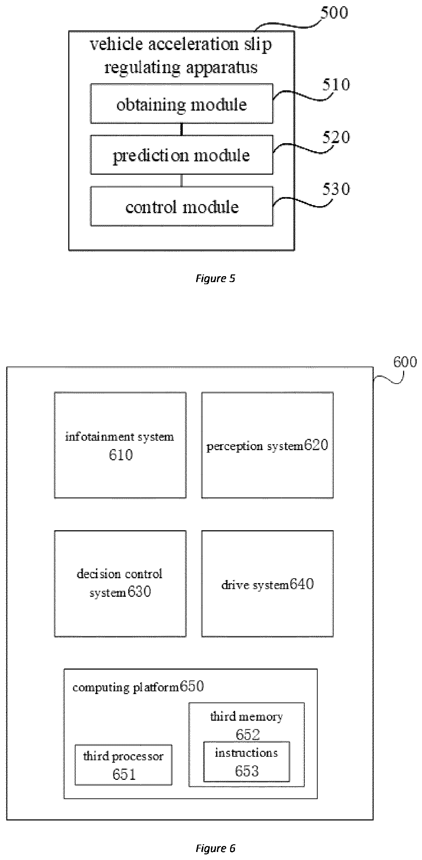

Based on the same concept, an example of the invention further provides an apparatus for vehicle acceleration slip regulating, and FIG. 5 is a block diagram of an apparatus 500 for vehicle acceleration slip regulating shown according to an example. Referring to FIG. 5, the apparatus 500 for vehicle acceleration slip regulating includes an obtaining module 510, a prediction module 520, and a control module 530.

The obtaining module 510 is configured to obtain a vehicle speed, state information of a driving motor, and an accelerator pedal opening degree of a vehicle at a current moment;
the predicting module 520 is configured to predict a target wheel torque of the vehicle according to the state information of the driving motor at the current moment and state information of the driving motor at a last moment, the last moment is a previous moment of the current moment; and
the control module 530 is configured to perform acceleration slip regulation on the vehicle according to a driving mode of the vehicle, the vehicle speed, the accelerator pedal opening degree, a motor output torque in the state information of the driving motor at the current moment, and the target wheel torque at the current moment.

Optionally, the control module 530 is configured to:
determine a requested motor torque of the vehicle at the current moment according to the vehicle speed of the vehicle and the accelerator pedal opening degree at the current moment;
determine a torque threshold of the vehicle at the current moment according to the vehicle speed and the driving mode of the vehicle at the current moment; and
performing acceleration slip regulation on the vehicle according to the motor output torque in the state information of the driving motor, the requested motor torque, the target wheel torque, and the torque threshold at the current moment.

Optionally, the control module is configured to:
determine a torque control value according to the motor output torque in the state information of the driving motor and the target wheel torque at the current moment; and
perform acceleration slip regulation by reducing the requested motor torque with the target wheel torque as a target in a case where the torque control value is greater than the torque threshold on the vehicle.

Optionally, the control module is configured to:
determine a magnitude relationship between a difference between the torque control value and the torque threshold and a preset difference threshold in the case where the torque control value is greater than the torque threshold;
perform acceleration slip regulation on the vehicle by reducing the requested motor torque to the target wheel torque within a preset period of time in a case where the difference between the torque control value and the torque threshold is greater than or equal to the preset difference threshold; or
perform acceleration slip regulation on the vehicle by reducing the requested motor torque to the target wheel torque according to a preset gradient in a case where the difference between the torque control value and the torque threshold is less than the preset difference threshold.

Optionally, the control module is configured to:
calculate a torque difference value between the motor output torque in the state information of the driving motor and the target wheel torque at the current moment, and determining the torque difference value as the torque control value at the current moment; or
calculate a torque quotient of the motor output torque in the state information of the driving motor and the target wheel torque at the current moment, and determining the torque quotient as the torque control value at the current moment.

Optionally, the state information of the driving motor includes a rotational speed of the driving motor; and the prediction module is configured to:
determine an angular acceleration of the driving motor according to the rotational speed of the driving motor of the vehicle at the current moment and a rotational speed of the driving motor at a last moment, the last moment is a previous moment of the current moment;
predict a predicted wheel torque of the vehicle according to the angular acceleration, a rotational inertia of the vehicle, a damping coefficient of the driving motor, the rotational speed of the driving motor at the current moment, and the motor output torque at the current moment; and
determine the target wheel torque according to the rotational speed of the driving motor and the predicted wheel torque at the current moment.

Optionally, the prediction module is configured to:
repeat the following steps:
determining a predicted motor rotational speed corresponding to the predicted wheel torque provided by the driving motor;
determining a torque compensation amount according to the predicted motor rotational speed and the rotational speed of the driving motor at the current moment;
obtaining a deviation rectification wheel torque for compensating the predicted wheel torque according to the torque compensation amount in a case where the torque compensation amount satisfies a torque compensation condition;
taking the deviation rectification wheel torque as the motor output torque of the driving motor at the current moment, and predicting again a predicted wheel torque of the vehicle according to the angular acceleration, the rotational inertia of the vehicle, the damping coefficient of the driving motor, the rotational speed of the driving motor and the deviation rectification wheel torque at the current moment; and
taking the predicted wheel torque as the target wheel torque until the torque compensation amount does not satisfy the torque compensation condition.

Optionally, the predicted wheel torque Tload of the vehicle is predicted by the following calculation formula: ${w}_{a} = \left({T}_{M}-k\times {w}_{v}-{T}_{load}\right) / J$
where wₐ is the angular acceleration, J is the rotational inertia of the vehicle, k is the damping coefficient of the driving motor, wᵥ is the rotational speed of the driving motor at the current moment, and T_{M} is the motor output torque at the current moment.

Regarding the apparatus 500 for vehicle acceleration slip regulating in the above example, a specific mode for each module to execute operation has been described in detail in the examples of the method, and will not be described in detail here.

It should be understood by those skilled in the art that the above example of the device is merely illustrative, for example, the division of modules is only one logical function division, and there may be other division modes in actual implementation, for example, a plurality of modules can be combined or integrated into one module. In addition, modules illustrated as separate components may or may not be physically separated. Also, each module may be implemented in whole or in part by software, hardware, firmware, or any combination of them. When implemented by the software, each module may be implemented in whole or in part in the form of a computer program product. When implemented by the hardware, each module may be implemented in whole or in part in the form of an integrated circuit or chip.

An example of the invention further provides a computer-readable storage medium, having computer program instructions stored, where when the program instructions are executed by a second processor, the steps of the method for vehicle acceleration slip regulating provided by any one of the foregoing examples of the invention are implemented.

An example of the invention further provides a vehicle, including:
a first processor; and
a first memory configured to store instructions which can be executed by the first processor;
where the first processor is configured to:
obtain a vehicle speed of the vehicle, state information of a driving motor, and an accelerator pedal opening degree at a current moment;
predict a target wheel torque of the vehicle according to the state information of the driving motor at the current moment and state information of the driving motor at a last moment, the last moment is a previous moment of the current moment based on a Luenberger observer which is constructed according to a rotational inertia of the vehicle and a damping coefficient of the driving motor; and
perform acceleration slip regulation on the vehicle according to a driving mode of the vehicle at the current moment, the vehicle speed, the accelerator pedal opening degree, a motor output torque in the state information at the current moment, and the target wheel torque.

It may be explained that the first processor configured by the vehicle in the example of the invention can execute executable instructions stored in the first memory to implement the method for vehicle acceleration slip regulating provided by any one of the foregoing examples of the invention.

FIG. 6 is a block diagram of a vehicle 600 shown according to an example. For example, the vehicle 600 may be a hybrid vehicle or a non-hybrid vehicle, an electric vehicle, a fuel cell vehicle, or other types of vehicles. The vehicle 600 may be an autonomous vehicle, a semi-autonomous vehicle, or a non-autonomous vehicle.

Referring to FIG. 6, the vehicle 600 may include various subsystems, such as an infotainment system 610, a perception system 620, a decision control system 630, a drive system 640, and a computing platform 650. The vehicle 600 may also include more or fewer subsystems, and each subsystem may include a plurality of components. In addition, interconnections between the subsystems and between the components of the vehicle 600 may be achieved in a wired or wireless manner.

In some examples, the infotainment system 610 may include a communication system, an entertainment system, a navigation system, and the like.

The perception system 620 may include a plurality of sensors configured to sense information of the environment surrounding the vehicle 600. For example, the perception system 620 may include a global positioning system (which may be a GPS system or a Beidou system or other positioning systems), an inertial measurement unit (IMU), a lidar, a millimeter wave radar, an ultrasonic radar, and a camera.

The decision control system 630 may include a computing system, a vehicle control unit, a steering system, a throttle, and a braking system.

The drive system 640 may include components that provide powered motion for the vehicle 600. In one example, the drive system 640 may include an engine, an energy source, a transmission system, and wheels. The engine may be one or a combination of more of an internal combustion engine, an electric motor, and an air compression engine. The engine can convert energy provided by the energy source into mechanical energy.

Some or all of the functions of the vehicle 600 are controlled by the computing platform 650. The computing platform 650 may include at least one third processor 651 and a third memory 652, and the third processors 651 may execute instructions 653 stored in the third memory 652.

The third processors 651 may be any conventional processor, such as a commercially available CPU. The processor may also include, for example, a graphic process unit (GPU), a field programmable gate array (FPGA), a system on chip (SOC), an application specific integrated chip (ASIC), or a combination of them.

The third memory 652 may be implemented by any type of volatile or non-volatile storage devices, or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

In addition to the instructions 653, the third memory 652 may store data such as road maps, route information, a location of a vehicle, a direction of the vehicle, a speed of the vehicle, and the like. The data stored in the third memory 652 may be used by the computing platform 650.

In the examples of the invention, the third processors 651 may execute the instructions 653 to complete all or part of the steps of the method for vehicle acceleration slip regulating described above.

## Claims

1. A method for vehicle (600) acceleration slip regulating comprising:
obtaining a vehicle speed, state information of a driving motor, and an accelerator pedal opening degree of the vehicle at a current moment, wherein the vehicle comprises a vehicle speed sensor or a wheel speed sensor, wherein the vehicle further comprises a vehicle control unit or a stroke switch of an accelerator pedal, wherein the vehicle further comprises a sensor configured on the driving motor (S11);
predicting a target wheel torque of the vehicle at the current moment according to the state information of the driving motor at the current moment and state information of the driving motor at a last moment, the last moment is a previous moment of the current moment (S12); and
performing acceleration slip regulation on the vehicle according to a driving mode, the vehicle speed, the accelerator pedal opening degree, a motor output torque in the state information of the driving motor and the target wheel torque at the current moment (S13);
**characterized in that** the step of performing acceleration slip regulation on the vehicle according to the driving mode, the vehicle speed, the accelerator pedal opening degree, the motor output torque in the state information of the driving motor, and the target wheel torque at the current moment comprises:
performing acceleration slip regulation on the vehicle according to the motor output torque in the state information of the driving motor, a requested motor torque of the vehicle at the current moment, the target wheel torque, and a torque threshold of the vehicle at the current moment.

2. The method for vehicle (600) acceleration slip regulating according to claim 1, wherein the requested motor torque is determined according to the vehicle speed of the vehicle and the accelerator pedal opening degree at the current moment; and
the torque threshold is determined according to the vehicle speed and the driving mode of the vehicle at the current moment.

3. The method for vehicle (600) acceleration slip regulating according to claim 1, wherein the step of performing acceleration slip regulation on the vehicle according to the motor output torque in the state information of the driving motor, the requested motor torque of the vehicle at the current moment, the target wheel torque, and the torque threshold of the vehicle at the current moment comprises:
determining a torque control value according to the motor output torque in the state information of the driving motor and the target wheel torque at the current moment; and
performing acceleration slip regulation by reducing the requested motor torque with the target wheel torque as a target in a case where the torque control value is greater than the torque threshold on the vehicle.

4. The method for vehicle (600) acceleration slip regulating according to claim 3, wherein the step of performing acceleration slip regulation by reducing the requested motor torque with the target wheel torque as a target in a case where the torque control value is greater than the torque threshold on the vehicle comprises:
determining a magnitude relationship between a difference between the torque control value and the torque threshold and a preset difference threshold in the case where the torque control value is greater than the torque threshold; and
performing acceleration slip regulation on the vehicle by reducing the requested motor torque to the target wheel torque within a preset period of time in a case where the difference between the torque control value and the torque threshold is greater than or equal to the preset difference threshold.

5. The method for vehicle (600) acceleration slip regulating according to claim 4, wherein the method further comprises:
performing acceleration slip regulation on the vehicle by reducing the requested motor torque to the target wheel torque according to a preset gradient in a case where the difference between the torque control value and the torque threshold is less than the preset difference threshold.

6. The method for vehicle (600) acceleration slip regulating according to any of claims 3 to 5, wherein the step of determining the torque control value according to the motor output torque in the state information of the driving motor and the target wheel torque at the current moment comprises:
calculating a torque difference value between the motor output torque in the state information of the driving motor and the target wheel torque at the current moment, and determining the torque difference value as the torque control value at the current moment; or
calculating a torque quotient of the motor output torque in the state information of the driving motor and the target wheel torque at the current moment, and determining the torque quotient as the torque control value at the current moment.

7. The method for vehicle (600) acceleration slip regulating according to any of claims 1 to 6, wherein the state information of the driving motor comprises a rotational speed of the driving motor; and
the step of predicting the target wheel torque of the vehicle at the current moment according to the state information of the driving motor at the current moment and the state information of the driving motor at the last moment comprises:
determining an angular acceleration of the driving motor according to the rotational speed of the driving motor of the vehicle at the current moment and a rotational speed of the driving motor at a last moment, the last moment is a previous moment of the current moment (S121);
predicting a predicted wheel torque of the vehicle according to the angular acceleration, a rotational inertia of the vehicle, a damping coefficient of the driving motor, the rotational speed of the driving motor at the current moment, and the motor output torque at the current moment (5122); and
determining the target wheel torque of the vehicle at the current moment according to the rotational speed of the driving motor and the predicted wheel torque at the current moment (S123).

8. The method for vehicle (600) acceleration slip regulating according to claim 7, wherein the step of determining the target wheel torque of the vehicle at the current moment according to the rotational speed of the driving motor and the predicted wheel torque at the current moment comprises:
repeating the following steps:
determining a predicted motor rotational speed corresponding to the predicted wheel torque provided by the driving motor;
determining a torque compensation amount according to the predicted motor rotational speed and the rotational speed of the driving motor at the current moment;
obtaining a deviation rectification wheel torque for compensating the predicted wheel torque according to the torque compensation amount in a case where the torque compensation amount satisfies a torque compensation condition;
taking the deviation rectification wheel torque as the motor output torque of the driving motor at the current moment, and predicting again a predicted wheel torque of the vehicle according to the angular acceleration, the rotational inertia of the vehicle, the damping coefficient of the driving motor, the rotational speed of the driving motor and the deviation rectification wheel torque at the current moment; and
taking the predicted wheel torque as the target wheel torque of the vehicle at the current moment until the torque compensation amount does not satisfy the torque compensation condition.

9. The method for vehicle (600) acceleration slip regulating according to claim 8, wherein the predicted wheel torque T_{load} of the vehicle is predicted by the following calculation formula: ${w}_{a} = \left({T}_{M}-k\times {w}_{v}-{T}_{load}\right) / J$ wherein wₐ is the angular acceleration, J is the rotational inertia of the vehicle, k is the damping coefficient of the driving motor, wᵥ is the rotational speed of the driving motor at the current moment, and T_{M} is the motor output torque of the driving motor at the current moment.

10. A vehicle (600) comprising:
a driving motor;
a first processor; and
a first memory configured to store instructions which can be executed by the first processor;
wherein the first processor is configured to:
obtain a vehicle speed, state information of the driving motor, and an accelerator pedal opening degree of the vehicle at a current moment, wherein the vehicle comprises a vehicle speed sensor or a wheel speed sensor, wherein the vehicle further comprises a vehicle control unit or a stroke switch of an accelerator pedal, wherein the vehicle further comprises a sensor configured on the driving motor;
predict a target wheel torque of the vehicle at the current moment according to the state information of the driving motor at the current moment and state information of the driving motor at a last moment, the last moment is a previous moment of the current moment; and
perform acceleration slip regulation on the vehicle according to a driving mode, the vehicle speed, the accelerator pedal opening degree, a motor output torque in the state information of the driving motor and the target wheel torque at the current moment;
**characterized in that** the first processor is further configured to execute the instructions stored in the first memory to implement:
performing acceleration slip regulation on the vehicle according to the motor output torque in the state information of the driving motor, a requested motor torque of the vehicle at the current moment, the target wheel torque, and a torque threshold of the vehicle at the current moment.

11. The vehicle (600) according to claim 10, wherein the requested motor torque is determined according to the vehicle speed of the vehicle and the accelerator pedal opening degree at the current moment; and
the torque threshold is determined according to the vehicle speed and the driving mode of the vehicle at the current moment.

12. The vehicle (600) according to claim 10, wherein the first processor is configured to execute the instructions stored in the first memory to implement:
determining a torque control value according to the motor output torque in the state information of the driving motor and the target wheel torque at the current moment; and
performing acceleration slip regulation by reducing the requested motor torque with the target wheel torque as a target in a case where the torque control value is greater than the torque threshold on the vehicle.

13. The vehicle (600) according to claim 12, wherein the first processor is configured to execute the instructions stored in the first memory to implement:
determining a magnitude relationship between a difference between the torque control value and the torque threshold and a preset difference threshold in the case where the torque control value is greater than the torque threshold; and
performing acceleration slip regulation on the vehicle by reducing the requested motor torque to the target wheel torque within a preset period of time in a case where the difference between the torque control value and the torque threshold is greater than or equal to the preset difference threshold.

14. The vehicle (600) according to claim 13, wherein the first processor is configured to execute the instructions stored in the first memory to implement:
performing acceleration slip regulation on the vehicle by reducing the requested motor torque to the target wheel torque according to a preset gradient in a case where the difference between the torque control value and the torque threshold is less than the preset difference threshold.

15. A computer-readable storage medium, having computer program instructions stored thereon, wherein when the program instructions are executed by a second processor to implement the method according to any of claims 1 to 9.

## Patentansprüche

1. Verfahren zur Regelung des Beschleunigungsschlupfes eines Fahrzeugs (600), das umfasst:
Erfassen einer Fahrzeuggeschwindigkeit, einer Zustandsinformation eines Antriebsmotors und eines Gaspedalöffnungsgrads des Fahrzeugs zu einem aktuellen Zeitpunkt, wobei das Fahrzeug einen Fahrzeuggeschwindigkeitssensor oder einen Raddrehzahlsensor aufweist, wobei das Fahrzeug ferner eine Fahrzeugsteuereinheit oder einen Hubschalter eines Gaspedals aufweist, wobei das Fahrzeug ferner einen an dem Antriebsmotor angeordneten Sensor aufweist (S11);
Vorhersagen eines Soll-Raddrehmoments des Fahrzeugs zum aktuellen Zeitpunkt auf der Grundlage der Zustandsinformation des Antriebsmotors zum aktuellen Zeitpunkt und einer Zustandsinformation des Antriebsmotors zu einem letzten Zeitpunkt, wobei der letzte Zeitpunkt ein dem aktuellen Zeitpunkt vorhergehender Zeitpunkt ist (S12); und
Durchführen einer Beschleunigungsschlupfregelung an dem Fahrzeug auf der Grundlage eines Fahrmodus, der Fahrzeuggeschwindigkeit, des Gaspedalöffnungsgrads, eines Motorausgangsdrehmoments in der Zustandsinformation des Antriebsmotors und des Soll-Raddrehmoments zum aktuellen Zeitpunkt (S13);
**dadurch gekennzeichnet, dass**
der Schritt des Durchführens einer Beschleunigungsschlupfregelung an dem Fahrzeug auf der Grundlage des Fahrmodus, der Fahrzeuggeschwindigkeit, des Gaspedalöffnungsgrads, des Motorausgangsdrehmoments in der Zustandsinformation des Antriebsmotors und des Soll-Raddrehmoments zum aktuellen Zeitpunkt umfasst:
Durchführen einer Beschleunigungsschlupfregelung an dem Fahrzeug auf der Grundlage des Motorausgangsdrehmoments in der Zustandsinformation des Antriebsmotors, eines angeforderten Motordrehmoments des Fahrzeugs zum aktuellen Zeitpunkt, des Soll-Raddrehmoments und eines Drehmomentschwellenwerts des Fahrzeugs zum aktuellen Zeitpunkt.

2. Verfahren zur Regelung des Beschleunigungsschlupfes eines Fahrzeugs (600) nach Anspruch 1, wobei das angeforderte Motordrehmoment auf der Grundlage der Fahrzeuggeschwindigkeit des Fahrzeugs und des Gaspedalöffnungsgrads zum aktuellen Zeitpunkt bestimmt wird; und
der Drehmomentschwellenwert auf der Grundlage der Fahrzeuggeschwindigkeit und des Fahrmodus des Fahrzeugs zum aktuellen Zeitpunkt bestimmt wird.

3. Verfahren zur Regelung des Beschleunigungsschlupfes eines Fahrzeugs (600) nach Anspruch 1, wobei der Schritt des Durchführens einer Beschleunigungsschlupfregelung an dem Fahrzeug auf der Grundlage des Motorausgangsdrehmoments in der Zustandsinformation des Antriebsmotors, des angeforderten Motordrehmoments des Fahrzeugs zum aktuellen Zeitpunkt, des Soll-Raddrehmoments und des Drehmomentschwellenwerts des Fahrzeugs zum aktuellen Zeitpunkt umfasst:
Bestimmen eines Drehmomentsteuerwerts auf der Grundlage des Motorausgangsdrehmoments in der Zustandsinformation des Antriebsmotors und des Soll-Raddrehmoments zum aktuellen Zeitpunkt; und
Durchführen einer Beschleunigungsschlupfregelung durch Verringern des angeforderten Motordrehmoments mit dem Soll-Raddrehmoment als Ziel in einem Fall, in dem der Drehmomentsteuerwert größer als der Drehmomentschwellenwert des Fahrzeugs ist.

4. Verfahren zur Regelung des Beschleunigungsschlupfes eines Fahrzeugs (600) nach Anspruch 3, wobei der Schritt des Durchführens einer Beschleunigungsschlupfregelung durch Verringern des angeforderten Motordrehmoments mit dem Soll-Raddrehmoment als einem Ziel in einem Fall, in dem der Drehmomentsteuerwert größer als der Drehmomentschwellenwert des Fahrzeugs ist, umfasst:
Bestimmen einer Größenbeziehung zwischen einer Differenz zwischen dem Drehmomentsteuerwert und dem Drehmomentschwellenwert und einem voreingestellten Differenzschwellenwert in dem Fall, in dem der Drehmomentsteuerwert größer als der Drehmomentschwellenwert ist; und
Durchführen einer Beschleunigungsschlupfregelung an dem Fahrzeug durch Verringern des angeforderten Motordrehmoments auf das Soll-Raddrehmoment innerhalb einer voreingestellten Zeitdauer in einem Fall, in dem die Differenz zwischen dem Drehmomentsteuerwert und dem Drehmomentschwellenwert größer als oder gleich dem voreingestellten Differenzschwellenwert ist.

5. Verfahren zur Regelung des Beschleunigungsschlupfes eines Fahrzeugs (600) nach Anspruch 4, wobei das Verfahren ferner umfasst:
Durchführen einer Beschleunigungsschlupfregelung an dem Fahrzeug durch Verringern des angeforderten Motordrehmoments auf das Soll-Raddrehmoment auf der Grundlage eines voreingestellten Gradienten in einem Fall, in dem die Differenz zwischen dem Drehmomentsteuerwert und dem Drehmomentschwellenwert kleiner als der voreingestellte Differenzschwellenwert ist.

6. Verfahren zur Regelung des Beschleunigungsschlupfes eines Fahrzeugs (600) nach einem der Ansprüche 3 bis 5, wobei der Schritt des Bestimmens des Drehmomentsteuerwerts auf der Grundlage des Motorausgangsdrehmoments in der Zustandsinformation des Antriebsmotors und des Soll-Raddrehmoments zum aktuellen Zeitpunkt umfasst:
Berechnen eines Drehmomentdifferenzwerts zwischen dem Motorausgangsdrehmoment in der Zustandsinformation des Antriebsmotors und dem Soll-Raddrehmoment zum aktuellen Zeitpunkt und Bestimmen des Drehmomentdifferenzwerts als den Drehmomentsteuerwert zum aktuellen Zeitpunkt; oder
Berechnen eines Drehmomentquotienten des Motorausgangsdrehmoments in der Zustandsinformation des Antriebsmotors und des Soll-Raddrehmoments zum aktuellen Zeitpunkt und Bestimmen des Drehmomentquotienten als den Drehmomentsteuerwert zum aktuellen Zeitpunkt.

7. Verfahren zur Regelung des Beschleunigungsschlupfes eines Fahrzeugs (600) nach einem der Ansprüche 1 bis 6, wobei die Zustandsinformation des Antriebsmotors eine Drehzahl des Antriebsmotors umfasst; und
der Schritt des Vorhersagens des Soll-Raddrehmoments des Fahrzeugs zum aktuellen Zeitpunkt auf der Grundlage der Zustandsinformation des Antriebsmotors zum aktuellen Zeitpunkt und der Zustandsinformation des Antriebsmotors zum letzten Zeitpunkt umfasst:
Bestimmen einer Winkelbeschleunigung des Antriebsmotors auf der Grundlage der Drehzahl des Antriebsmotors des Fahrzeugs zum aktuellen Zeitpunkt und einer Drehzahl des Antriebsmotors zu einem letzten Zeitpunkt, wobei der letzte Zeitpunkt ein dem aktuellen Zeitpunkt vorhergehender Zeitpunkt ist (S121);
Vorhersagen eines vorhergesagten Raddrehmoments des Fahrzeugs auf der Grundlage der Winkelbeschleunigung, eines Trägheitsmoments des Fahrzeugs, eines Dämpfungskoeffizienten des Antriebsmotors, der Drehzahl des Antriebsmotors zum aktuellen Zeitpunkt und des Motorausgangsdrehmoments zum aktuellen Zeitpunkt (S122); und
Bestimmen des Soll-Raddrehmoments des Fahrzeugs zum aktuellen Zeitpunkt auf der Grundlage der Drehzahl des Antriebsmotors und des vorhergesagten Raddrehmoments zum aktuellen Zeitpunkt (S123).

8. Verfahren zur Regelung des Beschleunigungsschlupfes eines Fahrzeugs (600) nach Anspruch 7, wobei der Schritt des Bestimmens des Soll-Raddrehmoments des Fahrzeugs zum aktuellen Zeitpunkt auf der Grundlage der Drehzahl des Antriebsmotors und des vorhergesagten Raddrehmoments zum aktuellen Zeitpunkt umfasst:
Wiederholen der folgenden Schritte:
Bestimmen einer vorhergesagten Motordrehzahl, die dem von dem Antriebsmotor bereitgestellten vorhergesagten Raddrehmoment entspricht;
Bestimmen eines Drehmomentkompensationsbetrags auf der Grundlage der vorhergesagten Motordrehzahl und der Drehzahl des Antriebsmotors zum aktuellen Zeitpunkt;
Erhalten eines abweichungskorrigierten Raddrehmoments zum Kompensieren des vorhergesagten Raddrehmoments auf der Grundlage des Drehmomentkompensationsbetrags in einem Fall, in dem der Drehmomentkompensationsbetrag eine Drehmomentkompensationsbedingung erfüllt;
Verwenden des abweichungskorrigierten Raddrehmoments als das Motorausgangsdrehmoment des Antriebsmotors zum aktuellen Zeitpunkt und erneutes Vorhersagen eines vorhergesagten Raddrehmoments des Fahrzeugs auf der Grundlage der Winkelbeschleunigung, des Trägheitsmoments des Fahrzeugs, des Dämpfungskoeffizienten des Antriebsmotors, der Drehzahl des Antriebsmotors und des abweichungskorrigierten Raddrehmoments zum aktuellen Zeitpunkt; und
Verwenden des vorhergesagten Raddrehmoments als das Soll-Raddrehmoment des Fahrzeugs zum aktuellen Zeitpunkt, bis der Drehmomentkompensationsbetrag die Drehmomentkompensationsbedingung nicht erfüllt.

9. Verfahren zur Regelung des Beschleunigungsschlupfes eines Fahrzeugs (600) nach Anspruch 8, wobei das vorhergesagte Raddrehmoment T_{load} des Fahrzeugs mittels der folgenden Berechnungsformel vorhergesagt wird: ${w}_{a} = \left({T}_{M}-k\times {w}_{v}-{T}_{load}\right) / J$ wobei wₐ die Winkelbeschleunigung ist, J das Trägheitsmoment des Fahrzeugs ist, k der Dämpfungskoeffizient des Antriebsmotors ist, wᵥ die Drehzahl des Antriebsmotors zum aktuellen Zeitpunkt ist und T_{M} das Motorausgangsdrehmoment des Antriebsmotors zum aktuellen Zeitpunkt ist.

10. Fahrzeug (600), das aufweist:
einen Antriebsmotor;
einen ersten Prozessor; und
einen ersten Speicher, der dazu konfiguriert ist, Anweisungen zu speichern, die von dem ersten Prozessor ausgeführt werden können;
wobei der erste Prozessor dazu konfiguriert ist:
eine Fahrzeuggeschwindigkeit, eine Zustandsinformation des Antriebsmotors und einen Gaspedalöffnungsgrad des Fahrzeugs zu einem aktuellen Zeitpunkt zu erfassen, wobei das Fahrzeug einen Fahrzeuggeschwindigkeitssensor oder einen Raddrehzahlsensor aufweist, wobei das Fahrzeug ferner eine Fahrzeugsteuereinheit oder einen Hubschalter eines Gaspedals aufweist, wobei das Fahrzeug ferner einen an dem Antriebsmotor angeordneten Sensor aufweist;
ein Soll-Raddrehmoment des Fahrzeugs zum aktuellen Zeitpunkt auf der Grundlage der Zustandsinformation des Antriebsmotors zum aktuellen Zeitpunkt und einer Zustandsinformation des Antriebsmotors zu einem letzten Zeitpunkt vorherzusagen, wobei der letzte Zeitpunkt ein dem aktuellen Zeitpunkt vorhergehender Zeitpunkt ist; und
eine Beschleunigungsschlupfregelung an dem Fahrzeug auf der Grundlage eines Fahrmodus, der Fahrzeuggeschwindigkeit, des Gaspedalöffnungsgrads, eines Motorausgangsdrehmoments in der Zustandsinformation des Antriebsmotors und des Soll-Raddrehmoments zum aktuellen Zeitpunkt durchzuführen;
**dadurch gekennzeichnet, dass** der erste Prozessor ferner dazu konfiguriert ist, die in dem ersten Speicher gespeicherten Anweisungen auszuführen, um Folgendes umzusetzen:
Durchführen einer Beschleunigungsschlupfregelung an dem Fahrzeug auf der Grundlage des Motorausgangsdrehmoments in der Zustandsinformation des Antriebsmotors, eines angeforderten Motordrehmoments des Fahrzeugs zum aktuellen Zeitpunkt, des Soll-Raddrehmoments und eines Drehmomentschwellenwerts des Fahrzeugs zum aktuellen Zeitpunkt.

11. Fahrzeug (600) nach Anspruch 10, wobei das angeforderte Motordrehmoment auf der Grundlage der Fahrzeuggeschwindigkeit des Fahrzeugs und des Gaspedalöffnungsgrads zum aktuellen Zeitpunkt bestimmt wird; und
der Drehmomentschwellenwert auf der Grundlage der Fahrzeuggeschwindigkeit und des Fahrmodus des Fahrzeugs zum aktuellen Zeitpunkt bestimmt wird.

12. Fahrzeug (600) nach Anspruch 10, wobei der erste Prozessor dazu konfiguriert ist, die in dem ersten Speicher gespeicherten Anweisungen auszuführen, um Folgendes umzusetzen:
Bestimmen eines Drehmomentsteuerwerts auf der Grundlage des Motorausgangsdrehmoments in der Zustandsinformation des Antriebsmotors und des Soll-Raddrehmoments zum aktuellen Zeitpunkt; und
Durchführen einer Beschleunigungsschlupfregelung durch Verringern des angeforderten Motordrehmoments mit dem Soll-Raddrehmoment als Ziel in einem Fall, in dem der Drehmomentsteuerwert größer als der Drehmomentschwellenwert des Fahrzeugs ist.

13. Fahrzeug (600) nach Anspruch 12, wobei der erste Prozessor dazu konfiguriert ist, die in dem ersten Speicher gespeicherten Anweisungen auszuführen, um Folgendes umzusetzen:
Bestimmen einer Größenbeziehung zwischen einer Differenz zwischen dem Drehmomentsteuerwert und dem Drehmomentschwellenwert und einem voreingestellten Differenzschwellenwert in dem Fall, in dem der Drehmomentsteuerwert größer als der Drehmomentschwellenwert ist; und
Durchführen einer Beschleunigungsschlupfregelung an dem Fahrzeug durch Verringern des angeforderten Motordrehmoments auf das Soll-Raddrehmoment innerhalb einer voreingestellten Zeitdauer in einem Fall, in dem die Differenz zwischen dem Drehmomentsteuerwert und dem Drehmomentschwellenwert größer als oder gleich dem voreingestellten Differenzschwellenwert ist.

14. Fahrzeug (600) nach Anspruch 13, wobei der erste Prozessor dazu konfiguriert ist, die in dem ersten Speicher gespeicherten Anweisungen auszuführen, um Folgendes umzusetzen:
Durchführen einer Beschleunigungsschlupfregelung an dem Fahrzeug durch Verringern des angeforderten Motordrehmoments auf das Soll-Raddrehmoment auf der Grundlage eines voreingestellten Gradienten in einem Fall, in dem die Differenz zwischen dem Drehmomentsteuerwert und dem Drehmomentschwellenwert kleiner als der voreingestellte Differenzschwellenwert ist.

15. Computerlesbares Speichermedium, auf dem Computerprogrammanweisungen gespeichert sind, wobei, wenn die Programmanweisungen von einem zweiten Prozessor ausgeführt werden, das Verfahren nach einem der Ansprüche 1 bis 9 umgesetzt wird.

## Revendications

1. Procédé de régulation de glissement à l'accélération d'un véhicule (600), comprenant les étapes consistant à :
obtenir une vitesse de véhicule, des informations d'état d'un moteur d'entraînement et un degré d'ouverture de pédale d'accélérateur du véhicule à un moment courant, dans lequel le véhicule comprend un capteur de vitesse de véhicule ou un capteur de vitesse de roue, dans lequel le véhicule comprend en outre une unité de commande de véhicule ou un commutateur de course d'une pédale d'accélérateur, dans lequel le véhicule comprend en outre un capteur configuré sur le moteur d'entraînement (S11) ;
prédire un couple de roue cible du véhicule au moment courant conformément aux informations d'état du moteur d'entraînement au moment courant et aux informations d'état du moteur d'entraînement à un dernier moment, le dernier moment étant un moment précédant le moment courant (S12) ; et
appliquer une régulation de glissement à l'accélération au véhicule conformément à un mode de conduite, à la vitesse de véhicule, au degré d'ouverture de pédale d'accélérateur, à un couple de sortie de moteur des informations d'état du moteur d'entraînement et au couple de roue cible au moment courant (S13) ;
**caractérisé en ce que** l'étape d'application de régulation de glissement à l'accélération au véhicule conformément au mode de conduite, à la vitesse de véhicule, au degré d'ouverture de pédale d'accélérateur, au couple de sortie de moteur des informations d'état du moteur d'entraînement et au couple de roue cible au moment courant consiste à :
appliquer une régulation de glissement à l'accélération au véhicule conformément au couple de sortie de moteur des informations d'état du moteur d'entraînement, à un couple moteur demandé du véhicule au moment courant, au couple de roue cible et à un seuil de couple du véhicule au moment courant.

2. Procédé de régulation de glissement à l'accélération d'un véhicule (600) selon la revendication 1, dans lequel le couple moteur demandé est déterminé conformément à la vitesse de véhicule du véhicule et au degré d'ouverture de pédale d'accélérateur au moment courant ; et
le seuil de couple est déterminé conformément à la vitesse de véhicule et au mode de conduite du véhicule au moment courant.

3. Procédé de régulation de glissement à l'accélération d'un véhicule (600) selon la revendication 1, dans lequel l'étape d'application de régulation de glissement à l'accélération au véhicule conformément au couple de sortie de moteur des informations d'état du moteur d'entraînement, au couple moteur demandé du véhicule au moment courant, au couple de roue cible et au seuil de couple du véhicule au moment courant comprend les étapes consistant à :
déterminer une valeur de commande de couple conformément au couple de sortie de moteur des informations d'état du moteur d'entraînement et au couple de roue cible au moment courant ; et
appliquer une régulation de glissement à l'accélération au véhicule en réduisant le couple moteur demandé, le couple de roue cible servant de cible, dans un cas dans lequel la valeur de commande de couple est supérieure au seuil de couple.

4. Procédé de régulation de glissement à l'accélération d'un véhicule (600) selon la revendication 3, dans lequel l'étape d'application de régulation de glissement à l'accélération au véhicule en réduisant le couple moteur demandé, le couple de roue cible servant de cible, dans un cas dans lequel la valeur de commande de couple est supérieure au seuil de couple comprend les étapes consistant à :
déterminer une relation d'amplitude entre une différence entre la valeur de commande de couple et le seuil de couple et un seuil de différence prédéfini dans un cas dans lequel la valeur de commande de couple est supérieure au seuil de couple ; et
appliquer une régulation de glissement à l'accélération au véhicule en réduisant le couple moteur demandé au couple de roue cible sur une période de temps prédéfinie dans un cas dans lequel la différence entre la valeur de commande de couple et le seuil de couple est supérieure ou égale au seuil de différence prédéfini.

5. Procédé de régulation de glissement à l'accélération d'un véhicule (600) selon la revendication 4, dans lequel le procédé comprend en outre l'étape consistant à :
appliquer une régulation de glissement à l'accélération au véhicule en réduisant le couple moteur demandé au couple de roue cible conformément à un gradient prédéfini dans un cas dans lequel la différence entre la valeur de commande de couple et le seuil de couple est inférieure au seuil de différence prédéfini.

6. Procédé de régulation de glissement à l'accélération d'un véhicule (600) selon l'une quelconque des revendications 3 à 5, dans lequel l'étape de détermination de la valeur de commande de couple conformément au couple de sortie de moteur des informations d'état du moteur d'entraînement et au couple de roue cible au moment courant comprend l'étape consistant à :
calculer une valeur de différence de couple entre le couple de sortie de moteur des informations d'état du moteur d'entraînement et le couple de roue cible au moment courant, et déterminer la valeur de différence de couple en tant que la valeur de commande de couple au moment courant ; ou
calculer un quotient de couple du couple de sortie de moteur des informations d'état du moteur d'entraînement et du couple de roue cible au moment courant, et déterminer le quotient de couple en tant que la valeur de commande de couple au moment courant.

7. Procédé de régulation de glissement à l'accélération d'un véhicule (600) selon l'une quelconque des revendications 1 à 6,
dans lequel les informations d'état du moteur d'entraînement comprennent une vitesse de rotation du moteur d'entraînement ; et
l'étape de prédiction du couple de roue cible du véhicule au moment courant conformément aux informations d'état du moteur d'entraînement au moment courant et aux informations d'état du moteur d'entraînement au dernier moment comprend les étapes consistant à :
déterminer une accélération angulaire du moteur d'entraînement conformément à la vitesse de rotation du moteur d'entraînement du véhicule au moment courant et à une vitesse de rotation du moteur d'entraînement à un dernier moment, le dernier moment étant un moment précédant le moment courant (S121) ;
prédire un couple de roue prédit du véhicule conformément à l'accélération angulaire, à une inertie de rotation du véhicule, à un coefficient d'amortissement du moteur d'entraînement, à la vitesse de rotation du moteur d'entraînement au moment courant et au couple de sortie de moteur au moment courant (S122) ; et
déterminer le couple de roue cible du véhicule au moment courant conformément à la vitesse de rotation du moteur d'entraînement et au couple de roue prédit au moment courant (S123).

8. Procédé de régulation de glissement à l'accélération d'un véhicule (600) selon la revendication 7, dans lequel l'étape de détermination du couple de roue cible du véhicule au moment courant conformément à la vitesse de rotation du moteur d'entraînement et au couple de roue prédit au moment courant consiste à :
répéter les étapes suivantes consistant à :
déterminer une vitesse de rotation de moteur prédite correspondant au couple de roue prédit fourni par le moteur d'entraînement ;
déterminer une quantité de compensation de couple conformément à la vitesse de rotation de moteur prédite et à la vitesse de rotation du moteur d'entraînement au moment courant ;
obtenir un couple de roue de rectification d'écart pour compenser le couple de roue prédit conformément à la quantité de compensation de couple dans un cas dans lequel la quantité de compensation de couple satisfait une condition de compensation de couple ;
prendre le couple de roue de rectification d'écart en tant que le couple de sortie de moteur du moteur d'entraînement au moment courant, et prédire de nouveau un couple de roue prédit du véhicule conformément à l'accélération angulaire, à l'inertie de rotation du véhicule, au coefficient d'amortissement du moteur d'entraînement, à la vitesse de rotation du moteur d'entraînement et au couple de roue de rectification d'écart au moment courant ; et
prendre le couple de roue prédit en tant que le couple de roue cible du véhicule au moment courant jusqu'à ce que la quantité de compensation de couple ne satisfasse plus la condition de compensation de couple.

9. Procédé de régulation de glissement à l'accélération d'un véhicule (600) selon la revendication 8, dans lequel le couple de roue prédit T_{load} du véhicule est prédit par la formule de calcul suivante : ${w}_{a} = \left({T}_{M}-k\times {w}_{v}-{T}_{load}\right) / J$ dans laquelle wₐ est l'accélération angulaire, J est l'inertie de rotation du véhicule, k est le coefficient d'amortissement du moteur d'entraînement, wᵥ est la vitesse de rotation du moteur d'entraînement au moment courant, et T_{M} est le couple de sortie de moteur du moteur d'entraînement au moment courant.

10. Véhicule (600), comprenant :
un moteur d'entraînement ;
un premier processeur ; et
une première mémoire configurée pour maintenir des instructions qui peuvent être exécutées par le premier processeur ;
dans lequel le premier processeur est configuré pour :
obtenir une vitesse de véhicule, des informations d'état du moteur d'entraînement et un degré d'ouverture de pédale d'accélérateur du véhicule à un moment courant, dans lequel le véhicule comprend un capteur de vitesse de véhicule ou un capteur de vitesse de roue, dans lequel le véhicule comprend en outre une unité de commande de véhicule ou un commutateur de course d'une pédale d'accélérateur, dans lequel le véhicule comprend en outre un capteur configuré sur le moteur d'entraînement ;
prédire un couple de roue cible du véhicule au moment courant conformément aux informations d'état du moteur d'entraînement au moment courant et aux informations d'état du moteur d'entraînement à un dernier moment, le dernier moment étant un moment précédant le moment courant ; et
appliquer une régulation de glissement à l'accélération au véhicule conformément à un mode de conduite, à la vitesse de véhicule, au degré d'ouverture de pédale d'accélérateur, à un couple de sortie de moteur des informations d'état du moteur d'entraînement et au couple de roue cible au moment courant ;
**caractérisé en ce que** le premier processeur est en outre configuré pour exécuter les instructions maintenues dans la première mémoire pour mettre en œuvre l'étape consistant à :
appliquer une régulation de glissement à l'accélération au véhicule conformément au couple de sortie de moteur des informations d'état du moteur d'entraînement, à un couple moteur demandé du véhicule au moment courant, au couple de roue cible et à un seuil de couple du véhicule au moment courant.

11. Véhicule (600) selon la revendication 10, dans lequel le couple moteur demandé est déterminé conformément à la vitesse de véhicule du véhicule et au degré d'ouverture de pédale d'accélérateur au moment courant ; et
le seuil de couple est déterminé conformément à la vitesse de véhicule et au mode de conduite du véhicule au moment courant.

12. Véhicule (600) selon la revendication 10, dans lequel le premier processeur est configuré pour exécuter les instructions maintenues dans la première mémoire pour mettre en œuvre les étapes consistant à :
déterminer une valeur de commande de couple conformément au couple de sortie de moteur des informations d'état du moteur d'entraînement et au couple de roue cible au moment courant ; et
appliquer une régulation de glissement à l'accélération au véhicule en réduisant le couple moteur demandé, le couple de roue cible servant de cible, dans un cas dans lequel la valeur de commande de couple est supérieure au seuil de couple.

13. Véhicule (600) selon la revendication 12, dans lequel le premier processeur est configuré pour exécuter les instructions maintenues dans la première mémoire pour mettre en œuvre les étapes consistant à :
déterminer une relation d'amplitude entre une différence entre la valeur de commande de couple et le seuil de couple et un seuil de différence prédéfini dans le cas dans lequel la valeur de commande de couple est supérieure au seuil de couple ; et
appliquer une régulation de glissement à l'accélération au véhicule en réduisant le couple moteur demandé au couple de roue cible sur une période de temps prédéfinie dans un cas dans lequel la différence entre la valeur de commande de couple et le seuil de couple est supérieure ou égale au seuil de différence prédéfini.

14. Véhicule (600) selon la revendication 13, dans lequel le premier processeur est configuré pour exécuter les instructions maintenues dans la première mémoire pour mettre en œuvre l'étape consistant à :
appliquer une régulation de glissement à l'accélération au véhicule en réduisant le couple moteur demandé au couple de roue cible conformément à un gradient prédéfini dans un cas dans lequel la différence entre la valeur de commande de couple et le seuil de couple est inférieure au seuil de différence prédéfini.

15. Support de stockage lisible par ordinateur, comportant des instructions de programme d'ordinateur maintenues en son sein, dans lequel les instructions de programme sont exécutées par un second processeur pour mettre en œuvre le procédé selon l'une quelconque des revendications 1 à 9.
